# EUROPEAN PATENT APPLICATION

(11) **EP 2 709 316 A1**
(43) Date of publication of application: **19.03.2014**
(21) Application number: 12782627.9
(22) Date of filing: 25.04.2012
(51) Int. Cl.: H04L 12/56

(54) **MULTIPORT ETHERNET INTERFACE DEVICE AND VPN SERVICE ACCESS METHOD THEREFOR**

(30) Priority: 12.05.2011 CN 201110122377
(71) Applicant: ZTE Corporation, Shenzhen, Guangdong 518057 (CN)
(72) Inventor: WANG, Jisheng, Shenzhen Guangdong 518057 (CN)
(74) Representative: Price, Nigel John King
(86) International application number: PCT/CN2012/074680
(87) International publication number: WO 2012/152186

(57) **Abstract**

The disclosure discloses a VPN service access method for a multi-port Ethernet interface deivice, comprising: acquiring, by the multi-port Ethernet interface device, a corresponding internal control VLAN according to information of a VPN service access mode, in-port information of a VPN service message and a preset mapping table; writing the internal control VLAN into the VPN service message; sending the VPN service message with the written internal control VLAN therein to a switch chip or an NP of a network device so that the switch chip or the NP can access a VPN service according to the internal control VLAN and a cascade port which is a port of the switch chip or the NP corresponding to the multi-port Ethernet interface device. The disclosure also provides a corresponding device. The multi-port Ethernet interface device and the the VPN service access method for the same disclosed herein achieve the VPN service access of a multi-port Ethernet interface device.

## Description

### TECHNICAL FIELD

The disclosure relates to the field of communications, and more particularly to a multi-port Ethernet interface device and a VPN service access method for the same.

### BACKGROUND

As an essential device of a core network, apart from the necessity to have a certain order of magnitude of switch capacity, it is also important for a middle or high-end switch or router to be compatible with a plurality of types of interfaces. Generally, a network device is connected with a low-end switch through a multi-port Ethernet interface device which basically achieves the connection of a plurality of ports with a switch port of a switch chip or a Network Processor (NP), for example, a plurality of 100M ports may correspond to a 1GE port of the switch chip or the NP, or a plurality of 1GE ports may correspond to a 10GE port of the switch chip or the NP, and so on and so forth.

A Virtual Private Network (VPN) service is an important service form of an access network, and the VPN service access modes supported by a carrier network currently include: port access, port+VLAN-ID access, port+VLAN-ID+802.1P priority access and port+QING access. It can be known from the access modes that port is a major factor of an LAN service access. Although a multi-port Ethernet interface device is currently available to enable the switch chip or the NP to distinguish ports correctly, no method is available to achieve a VPN service access on a multi-port Ethernet interface device.

### SUMMARY

The main purpose of the disclosure is to provide a multi-port Ethernet interface device and a VPN service access method for the same, so as to achieve the VPN service access of the multi-port Ethernet interface device.

The disclosure provides a VPN service access method for a multi-port Ethernet interface device, which includes:
acquiring, by the multi-port Ethernet interface device, a corresponding internal control VLAN according to information of a VPN service access mode, in-port information of a VPN service message and a preset mapping table;
writing the internal control VLAN into the VPN service message; and
sending the VPN service message with the written internal control VLAN therein to a switch chip or a Network Processor (NP) of a network device so that the switch chip or the NP can access a VPN service according to the internal control VLAN and a cascade port, wherein the cascade port is a port of the switch chip or the NP corresponding to the multi-port Ethernet interface device.

Preferably, the acquiring, by the multi-port Ethernet interface device, a corresponding internal control VLAN according to information of a VPN service access mode, in-port information of a VPN service message and a preset mapping table may included: acquiring the corresponding internal control VLAN according to the in-port information of a VPN service message and the mapping table when the VPN service access mode is a port access mode.

Preferably, the acquiring the corresponding internal control VLAN according to the in-port information of a VPN service message and the mapping table may include: extracting the in-port information of the VPN service message; and acquiring the corresponding internal control VLAN by searching the mapping table according to the in-port information and a preset default VLAN.

Preferably, the acquiring, by the multi-port Ethernet interface device, a corresponding internal control VLAN according to information of a VPN service access mode, in-port information of a VPN service message and a preset mapping table may include: acquiring the corresponding internal control VLAN according to the in-port information of the VPN service message and the mapping table when the VPN service access mode is a port+VLAN-ID access mode, a port+VLAN-ID+802.1P priority access mode or a port+QING access mode.

Preferably, the acquiring the corresponding internal control VLAN according to the in-port information of the VPN service message and the mapping table may include: extracting VLAN and in-port information in the VPN service message; and acquiring the corresponding internal control VLAN by searching the mapping table according to the VLAN and in-port information.

Preferably, the writing the internal control VLAN into the VPN service message may include: adding the internal control VLAN into the VPN service message; or modifying VLAN information in the VPN service message to the internal control VLAN.

The disclosure also provides a multi-port Ethernet interface device, which includes:
an acquisition module configured to acquire a corresponding internal control VLAN according to information of a Virtual Private Network (VPN) service access mode, in-port information of a VPN service message and a preset mapping table;
a writing module configured to write the internal control VLAN into the VPN service message; and
an access module configured to send the VPN service message with the written internal control VLAN therein to a switch chip or a Network Processor (NP) of a network device so that the switch chip or the NP can access a VPN service according to the internal control VLAN and a cascade port, wherein the cascade port is a port of the switch chip or the NP corresponding to the multi-port Ethernet interface device.

Preferably, the acquisition module may include: a first acquisition unit configured to acquire the corresponding internal control VLAN according to the in-port information of a VPN service message and the mapping table when the VPN service access mode is a port access mode.

Preferably, the first acquisition unit may include: a first extraction subunit configured to extract the in-port information of the VPN service message; and a first searching subunit configured to acquire the corresponding internal control VLAN by searching the mapping table according to the in-port information and a preset default VLAN.

Preferably, the acquisition module may further include: a second acquisition unit configured to acquire the corresponding internal control VLAN according to the in-port information of the VPN service message and the mapping table when the VPN service access mode is a port+VLAN-ID access mode, a port+VLAN-ID+802.1P priority access mode or a port+QING access mode.

Preferably, the second acquisition unit may include: a second extraction subunit configured to extract VLAN and in-port information in the VPN service message; and a second searching subunit configured to acquire the corresponding internal control VLAN by searching the mapping table according to the VLAN and in-port information.

The multi-port Ethernet interface device and the VPN service access method for the same provided herein map VPN service messages into different unique internal control VLANs according to different VPN service access modes, distinguish the VPN service messages by the internal control VLANs, and send the internal VLANs to a switch chip or an NP by writing the internal control VLANs into the VPN service messages so that the switch chip or NP can access VPN services into an access network by a cascade port (a port of the switch chip or the NP uniquely corresponding to the multi-port Ethernet interface device) and the internal control VLAN.

### BRIEF DESCRIPTION OF THE DRAWINGS

Fig. 1 is a schematic diagram illustrating a flow of a VPN service access method for a multi-port Ethernet interface device disclosed herein according to an embodment of the disclosure;
Fig. 2 is a schematic diagram illustrating an internal control VLAN acquistion flow implemented in a VPN service access method for a multi-port Ethernet interface device disclosed herein when a VPN service is accessed in a port access mode according to an embodiment of the disclosure;
Fig. 3 is a schematic diagram illustrating an internal control VLAN acquistion flow implemented in a VPN service access method for a multi-port Ethernet interface device disclosed herein when a VPN service is accessed in a port+VLAN access mode according to an embodiment of the disclosure;
Fig. 4 is a schematic diagram illustrating a structure of a multi-port Ethernet interface device disclosed herein according to an embodiment of the disclosure;
Fig. 5 is a schematic diagram illustrating a structure of a first acquisition unit of an acquisition module in an embodiment of a multi-port Ethernet interface device disclosed herein;
Fig. 6 is a schematic diagram illustrating another structure of a second acquisition unit of an acquisition module in an embodiment of a multi-port Ethernet interface device disclosed herein.

### DETAILED DESCRIPTION

It should be appreciated that embodiments described herein are merely illustrative of the disclosure but are not to be construed as limiting the disclosure.

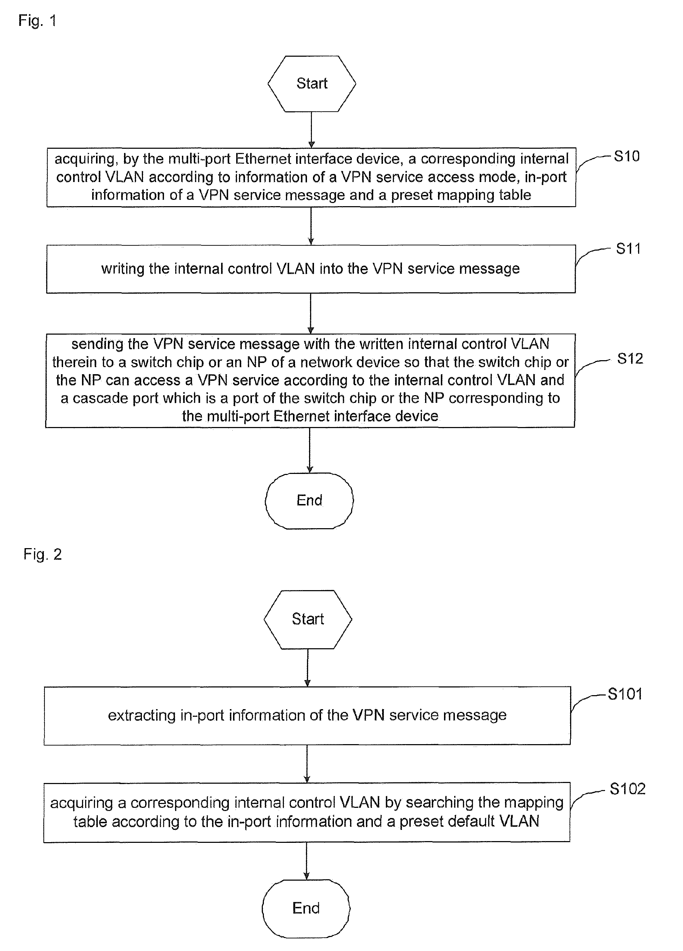

Fig. 1 illustrates an embodiment of a VPN service access method for a multi-part Ethernet interface device disclosed herein, which includes:
Step S10: the multi-port Ethernet interface device acquires a corresponding internal control VLAN according to information of a VPN service access mode, in-port information of a VPN service message and a preset mapping table.

In the embodiment, the multi-port Ethernet interface device is arranged between a port module of a network device and a switch chip or an NP to receive a VPN service message forwarded by the port module and to acquire an internal control VLAN uniquely corresponding to a VPN service after processing the VPN service message received. The internal control VLAN is an internal VLAN of the switch chip or the NP which is used to distinguish VPN services.

A mapping table is preset in the multi-port Ethernet interface device, the mapping table, which embodies the one-to-one correspondence linear relationship between ports of the multi-port Ethernet interface device and internal control VLANs, is changed in form with VPN service access modes which include: port access, port+VLAN-ID access, port+VLAN-ID+802.1P priority access port+QING access and so on. The mapping table embodies the one-to-one correspondence relationship between a port+preset default VLAN and an internal control VLAN when the VPN service access mode is port access or the one-to-one port correspondence relationship between a port+VLAN (the VLAN is a VLAN in the VPN service message) and an internal control VLAN when the VPN service access mode is port+VLAN-ID access. No matter in which form the mapping table is, the mapping relationship shown in the mapping table can be determined according to the actual situation. If no corresponding internal control VLAN is found in the mapping table, then the VPN service message is discarded or subjected to another processing, for example, the VPN service message is added with a mark to prompt the switch chip or the NP not to implement a processing on the message.

Step S11: the internal control VLAN is written into the VPN service message.

Here is examplarily described the access of a VPN service from a designated port (for example, port 1) of the multi-port Ethernet interface device, and the access of a VPN service from other ports can be deduced in the same way. If it is assumed that the VPN service message accessed from the port 1 is mapped into an internal control VLAN 2000, then the internal control VLAN 2000 is written into the VPN service message received by the port 1 in various ways: replacing the original VLAN in the VPN service message with the internal control VLAN 2000, or inserting the internal control VLAN 2000 into the VPN service message by, for example, adding or modifying fields of the VPN service message.

Step S12: the VPN service message with the written internal control VLAN therein is sent to a switch chip or an NP of a network device so that the switch chip or the NP can access a VPN service according to the internal control VLAN and a cascade port, wherein the cascade port is a port of the switch chip or the NP corresponding to the multi-port Ethernet interface device.

The multi-port Ethernet interface device sends the VPN service message with the written internal control VLAN therein to the switch chip or the NP. The switch chip or the NP accesses a VPN service into an access network using a cascade port and the internal control VLAN, thereby achieving the access of a VPN service from the multi-port Etharnet interface device.

In the embodiment, the VPN service message may be mapped into different unique internal control VLANs according to different VPN service access modes, the VPN service message can ne distinguished by the internal control VLANs, the internal control VLAN is written into the VPN service message and then sent to the switch chip or the NP which accesses the VPN service into an access network by a cascade port (a port of the switch chip or the NP uniquely corresponding to the multi-port Ethernet interface device) and the internal control VLAN.

In an embodiment, step S10 may include:
a corresponding internal control VLAN is acquired according to in-port information of a VPN service message and the mapping table when the VPN service access mode is a port access mode.

As VLAN information of a VPN service message is not concerned in a port-based VPN service access mode. A default VLAN, for example, VLAN 0, is uniformly added into the VPN service message entering from a port for the later implemtnation of a mapping table, alternatively, in the later later implemtnation of a mapping table, the default VLAN is directly used in theport-based VPN service access mode without being adding into the VPN service message.

It is proposed in the embodiment to acquire a corresponding internal control VLAN in the mapping table using a default VLAN.

Referring to Fig. 2, in the aforementioned embodiment, the acquiring a corresponding internal control VLAN according to a VPN service message and the mapping table further includes:
Step S101: in-port information of the VPN service message is extracted.

In a port-based VPN service access mode, the multi-port Ethernet interface device parses the VPN service message entering the port to obtain message information, and in order to improve the message processing efficiency, it is needed to selectively implement a message parsing setting. Typically, the message information includes: in-port information, DMAC, SMAC, OVLAN, IVLAN, 802.1p priority, Ethertype, Ip_protocol, DIP and SIP, which may be selectively parsed as needed. Then, the in-port information of the VPN service message is extracted.

Step S102: a corresponding internal control VLAN is acquired by searching the mapping table according to the in-port information and a preset default VLAN.

The mapping table is searched according to the in-port information and the default VLAN, the default VLAN is added in the VPN service message when the multi-port Ethernet interface device receives the VPN service message, alternatively, the in-port information and the default VLAN are directly written into a keyword when the mapping table is searched, and then the keyword is used as an index to search the mapping table. If no corresponding internal control VLAN is found in the mapping table according to a port and the default VLAN, then the VPN service message is discarded or added with another mark, or the default VLAN is modfied to another specific VLAN such as VLAN 3000 to indicate a failed search, and then the modified VPN service message is sent to the switch chip or the NP which implements no processing on such VPN service message.

How to search a mapping table in a port-based VPN access mode is proposed in the embodiment.

In an embodiment, step S10 may further include:
a corresponding internal control VLAN is acquired according to in-port information of a VPN service message and the mapping table when the VPN service access mode is a port+VLAN-ID access mode, a port+VLAN-ID+802.1P priority access mode or a port+QING access mode.

To enable the multi-port Ethernet interface device to access a VPN service in a port+VLAN-ID access mode, a port+VLAN-ID+802.1P priority access mode or a port+QING access mode, it is needed to recognize the VLAN in the VPN service message, thus, the VPN service message entering from a certain port can be accessed into a network according to the VLAN included in the message.

A corresponding internal control VLAN can be acquired according to the in-port information and VLAN included in the VPN service message when the mapping table is searched.

It is proposed in the embodiment to acquire a corresponding internal control VLAN by searching the mapping table with the information included in the VPN message.

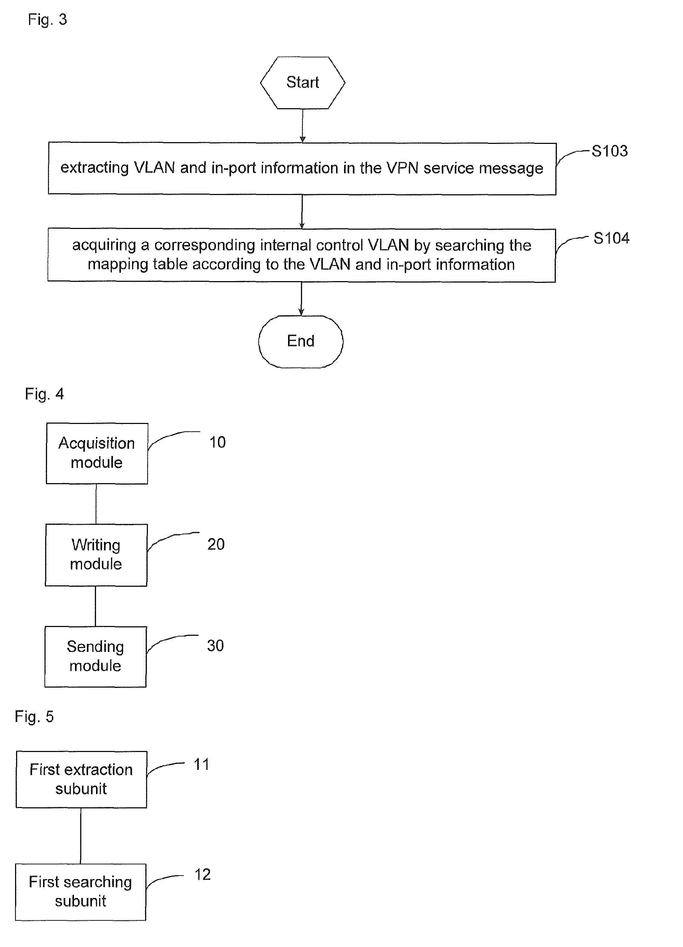

Referring to Fig. 3, the acquiring a corresponding internal control VLAN according to a VPN service message and the mapping table may further include:
Step S103: VLAN and in-port information in the VPN service message is extracted.
   in a VPN service access mode such as a port+VLAN-ID access mode, a port+VLAN-ID+802.1P priority access mode or a port+QING access mode, the multi-port Ethernet interface device parses the VPN service message entering the port to obtain message information, and in order to improve the message processing efficiency, it is needed to selectively implement a message parsing setting. Typically, the message information include: in-port information, DMAC, SMAC, OVLAN, IVLAN, 802.1p priority, Ethertype, Ip_protocol, DIP and SIP, which may be selectively parsed as needed to extract in-port information and VLAN in the VPN service message.
Step S104: the corresponding internal control VLAN is acquired by searching the mapping table according to the VLAN and in-port information.

If no corresponding internal control VLAN is found from the search in the mapping table according to the in-port information and the VLAN included in the VPN service message, such as a port and the VLAN included in the VPN service message, then the VPN service message is discarded or added with another mark, or the default VLAN is modified to another specific VLAN such as VLAN 3000 to indicate a failed search, and then the modified VPN service message is sent to the switch chip or the NP which implements no processing on such VPN service message.

How to search a mapping table in a port+VLAN-ID VPN access mode is proposed in the embodiment.

Fig. 4 shows an embodiment of a multi-port Ethernet interface device disclosed herein, which includes:
an acquisition module 10 configured to acquire a corresponding internal control VLAN according to information of a VPN service access mode, in-port information of a VPN service message and a preset mapping table;
a writing module 20 configured to write the internal control VLAN into the VPN service message;
a sending module 30 configured to send the VPN service message with the written internal control VLAN therein to a switch chip or an NP of a network device so that the switch chip or the NP can access a VPN service according to the internal control VLAN and a cascade port, wherein the cascade port is a port of the switch chip or the NP corresponding to the multi-port Ethernet interface device.

In the embodiment, the multi-port Ethernet interface device is arranged between a port module of a network device and a switch chip or an NP to receive a VPN service message forwarded by the port module and to acquire an internal control VLAN uniquely corresponding to a VPN service after the acquisition module 10 processes the VPN service message. The internal control VLAN is an internal VLAN of the switch chip or the NP which is used to distinguish VPN services. The processing of the acquisition module 10 refers to the acquisition of a corresponding internal control VLAN based on a mapping relationship.

A mapping table is preset in the multi-port Ethernet interface device, the mapping table, which embodies the one-to-one correspondence linear relationship between ports of the multi-port Ethernet interface device and internal control VLANs, is changed in form with VPN service access modes which include: port access, port+VLAN-ID access, port+VLAN-ID+802.1P priority access and port+QING access. The mapping table embodies the one-to-one correspondence relationship between a port+preset default VLAN and an internal control VLAN when the VPN service access mode is port access or the one-to-one port correspondence relationship between a port+VLAN-ID (the VLAN-ID is a VLAN in the VPN service message) and an internal control VLAN when the VPN service access mode is port+VLAN-ID access. No matter in which form the mapping table is, the mapping relationship shown in the mapping table can be determined according to the actual situation. If the acquisition module 10 finds no corresponding internal control VLAN in the mapping table, the acquisition module 10 discards the VPN service message or implements another processing, for example, adds a mark into the VPN service message to prompt the switch chip or the NP not to implement a processing on the message.

Here is examplarily described the access of a VPN service from a designated port (for example, port 1) of the multi-port Ethernet interface device, and the access of a VPN service from other ports can be deduced in the same way. If it is assumed that the VPN service message accessed from the port 1 is mapped into an internal control VLAN 2000, the writing module 20 writes the internal control VLAN 2000 into the VPN service message received by the port 1 in many ways: replacing the original VLAN in the VPN service message with the internal control VLAN 2000, or inserting the internal control VLAN 2000 into the VPN service message by, for example, adding or modifying fields of the VPN service message.

The sending module 30 sends the VPN service message with the written internal control VLAN therein to the switch chip or an NP. The switch chip or the NP accesses the VPN service into the access network according to a cascade port and the internal control VLAN, thereby achieving the access of the VPN service from the multi-port Ethernet interface device.

In the embodiment, the VPN service message may be mapped into different unique internal control VLANs according to different VPN service access modes, the VPN service message can be distinguished by the internal control VLANs, the internal control VLANs is written into the VPN service message and then sent to the switch chip or the NP which accesses the VPN service into an access network by a cascade port (a port of the switch chip or the NP uniquely corresponding to the multi-port Ethernet interface device) and the internal control VLANs.

In an embodiment, the acquisition module 10 may include:
a first acquisition unit configured to acquire a corresponding internal control VLAN according to in-port information of a VPN service message and the mapping table when the VPN service access mode is a port access mode.

As VLAN information of a VPN service message is not concerned in a port-based VPN service access mode, the first acquisition unit uniformly adds a default VLAN, for example, VLAN 0, to the VPN service message entering from a port for the later implementation of a mapping table, or directly uses the default VLAN in the port-based VPN service access mode in the later implementation of a mapping table without adding the default VLAN in the VPN service message.

In the embodiment, it is proposed to acquire a corresponding internal control VLAN in the mapping table using a default VLAN.

Referring to Fig. 5, in the aforementioned embodiment, the first acquisition unit further includes:
a first extraction subunit 11 configured to extract in-port information of the VPN service message; and
a first searching subunit 12 configured to acquire a corresponding internal control VLAN by searching the mapping table according to the in-port information and a preset default VLAN.

In a port-based VPN service access mode, the first extraction subunit 11 parses the VPN service message entering the port to obtain message information, and in order to improve the message processing efficiency, it is needed to selectively implement a message parsing setting. Typically, the message information includes: in-port information, DMAC, SMAC, OVLAN, IVLAN, 802.1p priority, Ethertype, Ip_protocol, DIP and SIP, which may be selectively parsed as needed to extract in-port information of the VPN service message.

The first searching subunit 12 searches the mapping table according to the in-port information and the default VLAN which is added in the VPN service message when the multi-port Ethernet interface device receives the VPN service message, or the in-port information and the default VLAN are directly written into a keyword when the mapping table is searched, and then the first searching subunit 12 searches the mapping table by taking the keyword as an index. If the first searching subunit 12 finds no corresponding internal control VLAN in the mapping table according to a port and the default VLAN-ID, then the first searching subunit 12 discards the VPN service message, adds another mark in the message, or modifies the default VLAN to another specific VLAN such as VLAN 3000 to indicate a failed search, and then sends the modified VPN service message to the switch chip or the NP. The switch chip or the NP implements no processing on such VPN service message.

How to search a mapping table in a port-based VPN access mode is proposed in the embodiment.

In the embodiment, the acquisition module 10 may further include:
a second acquisition unit configured to acquire a corresponding internal control VLAN according to in-port information of a VPN service message and the mapping table when the VPN service access mode is a port+VLAN-ID access mode, a port+VLAN-ID+802.1P priority access mode or a port+QING access mode.

To enable the multi-port Ethernet interface device to access a VPN service in a port+VLAN-ID access mode, a port+VLAN-ID+802.1P priority access mode or a port+QING access mode, the second acquisition unit needs to recognize the VLAN in the VPN service message, thus, the VPN service message entering from a certain port can be accessed into a network according to the VLAN included in the message.

When searching the mapping table, the second acquisition unit can acquire a corresponding internal control VLAN according to the in-port information and VLAN included in the message.

It is proposed in the embodiment to acquire a corresponding internal control VLAN by searching the mapping table with the information included in the VPN message.

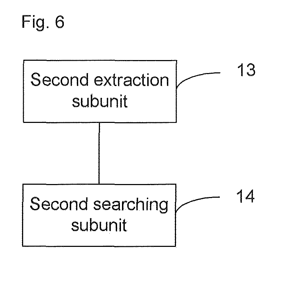

Referring to Fig. 6, the second acquisition unit further includes:
a second extraction subunit 13 configured to extract the VLAN and in-port information in the VPN service message; and
a second searching subunit 14 configured to search the mapping table according to the VLAN and in-port information to acquire a corresponding internal control VLAN.

In a VPN service access mode such as a port+VLAN-ID access mode, a port+VLAN-ID+802.1P priority access mode or a port+QING access mode, the second extraction subunit 13 parses the VPN service message entering the port to obtain message information, and in order to improve the message processing efficiency, it is needed to selectively implement a message parsing setting. Typically, the message information includes: in-port information, DMAC, SMAC, OVLAN, IVLAN, 802.1p priority, Ethertype, Ip_protocol, DIP and SIP, which may be selectively parsed as needed to extract in-port information and VLAN in the VPN service message.

After finding no corresponding internal control VLAN from the search in the mapping table according to the in-port information and the VLAN included in the VPN service message, such as a port and the VLAN included in the VPN service message, the second searching subunit 14 discards the VPN service message, adds another mark into the message, or modifies the default VLAN to another specific VLAN such as VLAN 3000 to indicate a failed search, and then sends the modified VPN service message to the switch chip or the NP. The switch chip or the NP implements no processing on such VPN service message.

How to search a mapping table in a port+VLAN-ID VPN access mode is proposed in the embodiment.

It should be appreciated that the above-mentioned embodiments are merely preferred ones of the disclosure but not to be construed as limiting the scope of the present invention, and that any equivalent structure or flow modification devised without departing from the content disclosed in the specification or accompanying drawings and any direct or indirect application of the disclosure in other related technical fields belong to the protection scope of the disclosure.

## Claims

1. A Virtual Private Network (VPN) service access method for a multi-port Ethernet interface device, comprising:
acquiring, by the multi-port Ethernet interface device, a corresponding internal control VLAN according to information of a VPN service access mode, in-port information of a VPN service message and a preset mapping table;
writing the internal control VLAN into the VPN service message; and
sending the VPN service message with the written internal control VLAN therein to a switch chip or a Network Processor (NP) of a network device so that the switch chip or the NP can access a VPN service according to the internal control VLAN and a cascade port, wherein the cascade port is a port of the switch chip or the NP corresponding to the multi-port Ethernet interface device.

2. The method according to claim 1, wherein the acquiring, by the multi-port Ethernet interface device, a corresponding internal control VLAN according to information of a VPN service access mode, in-port information of a VPN service message and a preset mapping table comprises:
acquiring the corresponding internal control VLAN according to the in-port information of a VPN service message and the mapping table when the VPN service access mode is a port access mode.

3. The method according to claim 2, wherein the acquiring the corresponding internal control VLAN according to the in-port information of a VPN service message and the mapping table comprises:
extracting the in-port information of the VPN service message; and
acquiring the corresponding internal control VLAN by searching the mapping table according to the in-port information and a preset default VLAN.

4. The method according to any one of claims 1 to 3, wherein the acquiring, by the multi-port Ethernet interface device, a corresponding internal control VLAN according to information of a VPN service access mode, in-port information of a VPN service message and a preset mapping table comprises:
acquiring the corresponding internal control VLAN according to the in-port information of the VPN service message and the mapping table when the VPN service access mode is a port+VLAN-ID access mode, a port+VLAN-ID+802.1P priority access mode or a port+QING access mode.

5. The method according to claim 4, wherein the acquiring the corresponding internal control VLAN according to the in-port information of the VPN service message and the mapping table comprises:
extracting VLAN and in-port information in the VPN service message; and
acquiring the corresponding internal control VLAN by searching the mapping table according to the VLAN and in-port information.

6. The method according to any one of claims 1 to 3, wherein the writing the internal control VLAN into the VPN service message comprises:
adding the internal control VLAN into the VPN service message; or modifying VLAN information in the VPN service message to the internal control VLAN.

7. A multi-port Ethernet interface device, comprising:
an acquisition module configured to acquire a corresponding internal control VLAN according to information of a Virtual Private Network (VPN) service access mode, in-port information of a VPN service message and a preset mapping table;
a writing module configured to write the internal control VLAN into the VPN service message; and
an access module configured to send the VPN service message with the written internal control VLAN therein to a switch chip or a Network Processor (NP) of a network device so that the switch chip or the NP can access a VPN service according to the internal control VLAN and a cascade port, wherein the cascade port is a port of the switch chip or the NP corresponding to the multi-port Ethernet interface device.

8. The device according to claim 7, wherein the acquisition module comprises:
a first acquisition unit configured to acquire the corresponding internal control VLAN according to the in-port information of a VPN service message and the mapping table when the VPN service access mode is a port access mode.

9. The device according to claim 8, wherein the first acquisition unit comprises:
a first extraction subunit configured to extract the in-port information of the VPN service message; and
a first searching subunit configured to acquire the corresponding internal control VLAN by searching the mapping table according to the in-port information and a preset default VLAN.

10. The device according to any one of claims 7 to 9, wherein the acquisition module further comprises:
a second acquisition unit configured to acquire the corresponding internal control VLAN according to the in-port information of the VPN service message and the mapping table when the VPN service access mode is a port+VLAN-ID access mode, a port+VLAN-ID+802.1P priority access mode or a port+QING access mode.

11. The device according to claim 10, wherein the second acquisition unit comprises:
a second extraction subunit configured to extract VLAN and in-port information in the VPN service message; and
a second searching subunit configured to acquire the corresponding internal control VLAN by searching the mapping table according to the VLAN and in-port information.
